# EUROPÄISCHE PATENTSCHRIFT

(11) **EP 3 682 509 B1**
(45) Veröffentlichungstag und Bekanntmachung des Hinweises auf die Patenterteilung: **14.06.2023**
(21) Anmeldenummer: 18810899.7
(22) Anmeldetag: 14.11.2018
(51) Int. Cl.: H01R 4/26, H01R 4/30, H01R 4/62

(54) **ELEKTRISCHE KONTAKTIERUNGSSCHNITTSTELLE MIT EINEM GERINGEN UND STABILEN ELEKTRISCHEN ÜBERGANGSWIDERSTAND**
ELECTRICAL CONTACTING INTERFACE HAVING A LOW AND STABLE ELECTRICAL TRANSITION RESISTANCE
INTERFACE DE CONTACT ÉLECTRIQUE AYANT UNE RÉSISTANCE DE CONTACT ÉLECTRIQUE FAIBLE ET STABLE

(30) Priorität: 24.11.2017 DE 102017221071
(43) Veröffentlichungstag der Anmeldung: 22.07.2020
(73) Patentinhaber: Siemens Aktiengesellschaft, 80333 München (DE)
(72) Erfinder: REICHENBACH, Norbert, 92224 Amberg (DE); KÄSBAUER, Peter, 92421 Schwandorf (DE)
(74) Vertreter: Siemens Patent Attorneys
(86) Internationale Anmeldenummer: PCT/EP2018/081155
(87) Internationale Veröffentlichungsnummer: WO 2019/101588

(56) Entgegenhaltungen:
- WO-A1-2015/052955
- CN-A- 103 715 524
- DE-A1- 2 156 292
- DE-A1-102015 216 380
- GB-A- 1 047 764
- US-A- 6 082 942

## Beschreibung

Die Erfindung betrifft eine elektrische Kontaktierungsschnittstelle mit einem geringen und stabilen elektrischen Übergangswiderstand mit mindestens zwei Kontaktierungspartnern, welche sich zur elektrischen Kontaktierung beaufschlagen.

Zur Leitung und Verteilung von elektrischem Strom werden elektrische Kontaktierungspartner verwendet. Hierbei müssen sehr häufig verschiedene Stromleiter miteinander verbunden werden. Diese Verbindungsstellen müssen so ausgeführt werden, dass der elektrische Spannungsabfall an der Verbindungstelle während der Nutzungsdauer möglichst gering bleibt. Dadurch wird eine Überhitzung der Verbindungsstelle vermieden, die die elektrische Isolation der zu verbindenden Stromleiter beschädigen könnte oder aber, wenn die Verbindungsstelle innerhalb eines elektrischen Geräts liegt, dieses in seiner Funktion beeinträchtigen, beschädigen oder auch zerstören könnte.

Ein niedriger Spannungsabfall garantiert außerdem eine energiesparende Verteilung und Leitung des Stroms. In Geräten zur Steuerung und Beeinflussung des elektrischen Stroms können etliche Verbindungsstellen vorhanden sein. Beispiele für solche Geräte können z.B. mechanische Schaltgeräte sein, die den Strom ein- und ausschalten oder auch elektronische Schaltgeräte wie z.B. Sanftstarter zum Steuern von Asynchronmaschinen. Ebenso können dies aber auch Umrichter oder Wechselrichter sein, die ein Drehstrom - System variabler Frequenz und Spannung erzeugen, um Motoren geeignet zu betreiben.

Verbindungsstellen müssen außerdem auch so beschaffen sein, dass sie bei den auftretenden Kombinationen aus Leitermaterialien und Oberflächenbeschichtungen eine dauerhaft gute elektrische Verbindung sicherstellen.

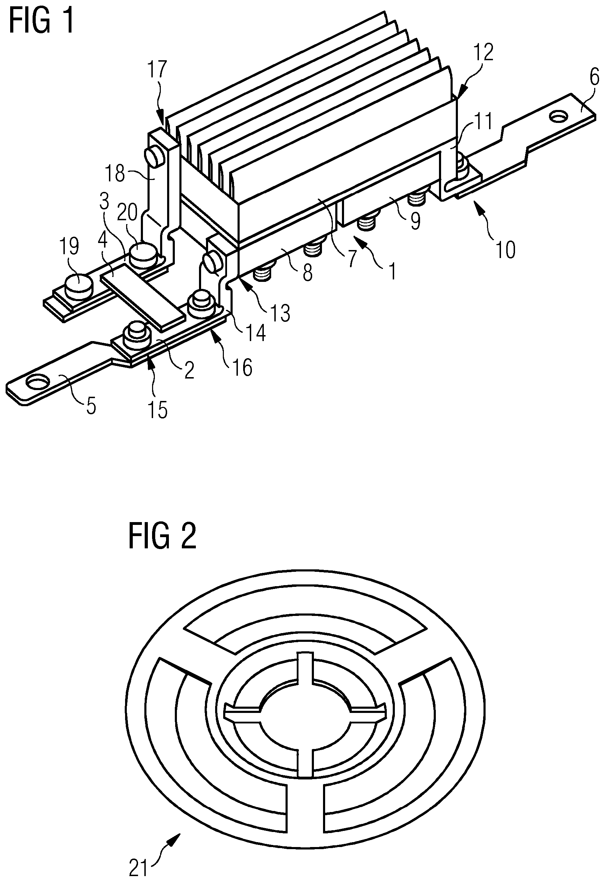

Als Beispiel für unterschiedliche Verbindungsstellen zeigt Fig. 1 ein Leistungsteil 1 mit einem mechanischen Kontaktsystem aus zwei Festschaltstücken 2, 3 und einer Brücke 4, wie es in Sanftstartgeräten verwendet wird. Diese Sanftstartgeräte werden zum Betreiben von Asynchronmaschinen in dreiphasigen Drehstromnetzen konzipiert und enthalten drei dieser in Fig. 1 gezeigten Baugruppen. Der Anschluss der Geräte an das Drehstromnetz erfolgt über die jeweiligen Anschlussschienen 5 und 6.

Im Leistungsteil 1 sind zwei Thyristoren antiparallel angeordnet. Mit den Thyristoren wird durch geeignete Ansteuerung die Stromsteuerung durchgeführt, um die ASM sanft anlaufen zu lassen oder auch zu bremsen. Die hierbei in den Thyristoren entstehenden elektrischen Verluste werden durch Aluminium-Kühlkörper 7, 8, 9 von diesen weggeführt, um deren Überhitzung zu vermeiden. Die beiden Thyristoren befinden sich zwischen dem oberen Kühlkörper 7 und den beiden unteren Kühlkörpern 8, 9 und sind hier nicht zu sehen.

Nach dem Anlauf befindet sich die ASM im stationären Betrieb. Zur Vermeidung der elektrischen Verluste in den Thyristoren in diesem Betriebszustand werden diese mit dem mechanischen Kontaktsystem überbrückt. Dieses besteht aus den Festschaltstücken 2 und 3 sowie der beweglichen Brücke 4, die im überbrückten Zustand auf den beiden Festschaltstücken 2, 3 aufliegt und diese leitend miteinander verbindet. Soll die ASM mittels der Thyristoren gesteuert werden, wird die Brücke 4 durch ein hier nicht gezeigtes Antriebssystem nach oben bewegt, so dass die Festschaltstücke 2, 3 nicht mehr verbunden sind. Die Überbrückung der Thyristoren ist dann aufgehoben.

Es gibt somit, je nach Betriebszustand, zwei Strompfade. Der Strompfad "Thyristorsteuerunq" besteht aus der Kupferanschlussschiene 6, der Verbindungsstelle 10, dem Aluminiumverbinder 11, der Verbindungsstelle 12 (hier nicht sichtbar), dem Kühlkörper 7, den Thyristoren, den Kühlkörpern 8, 9, der Verbindungsstelle 13, dem Aluminiumverbinder 14, den Verbindungsstellen 15, 16 und der Kupferanschlussschiene 5.

Der Strompfad "Überbrückung" besteht aus der Kupferanschlussschiene 6, der Verbindungsstelle 10, dem Aluminiumverbinder 11, der Verbindungsstelle 12 (hier nicht sichtbar), dem Kühlkörper 7, der Verbindungsstelle 17 , dem Aluminiumverbinder 18, den Verbindungsstellen 19, 20, dem Festschaltstück 3, der Kontaktfläche zwischen Festschaltstück 3 und beweglicher Brücke 4, der beweglichen Brücke 4, der Kontaktfläche der beweglichen Brücke 4 und dem Festschaltstück 2, den Verbindungsstellen 15, 16 und der Kupferanschlussschiene 5. Innerhalb eines Strompfades sind somit mehrere Verbindungsstellen vorhanden. Im Strompfad "Überbrückung" sind dies die Verbindungsstelle 10 mit der Materialpaarung "Kupfer verzinnt mit Aluminium", die Verbindungsstellen 12 (hier nicht sichtbar) und 17 mit der Materialpaarung "Aluminium-Aluminium, die Verbindungsstellen 19, 20 mit den Partnern "blankes Kupfer-Aluminium" und die Verbindungsstellen 15, 16 mit den drei Partnern "blankes Kupfer-Aluminium-verzinntes Kupfer".

Derzeitig ist es so, dass alle Verbindungsstellen zu hohe Übergangswiderstände haben können und dass sich diese Übergangswiderstände bei mehreren aufeinanderfolgenden Erwärmungsvorgängen deutlich verändern, indem sie in der Regel höher werden. So beträgt z.B. bei der Verbindungstelle 10 der anfängliche Übergangswiderstand 20 uOhm. Nach mehreren Erwärmungsvorgängen steigt dieser bis um das 10-fache an, so dass der Teststrom von 690 A zu einer Überhitzung dieser Verbindungsstelle führt. Die Verbindungsstellen 15, 16 und 19, 20 zeigen ebenfalls eine deutliche Zunahme des Übergangswiderstands, so dass die bewegliche Brücke 4 auf zu hohe Temperaturen erwärmt wird. Auch die Übergangswiderstände der Verbindungsstellen 17, 13 und 12 bleiben nicht stabil und steigen an. Alle diese Verbindungsverluste führen bereits im überbrückten Betrieb, wenn also die Thyristoren nicht im Einsatz sind, zu einer starken Erwärmung der Leistungsteile, wodurch die Schalthäufigkeit drastisch reduziert wird.

Die Erwärmung der drei Leistungsteile kann dabei stark unterschiedlich sein, da alle Verbindungsstellen sich unterschiedlich verhalten und damit unterschiedlich viel Verlustwärme erzeugen.

Auch im Betriebszustand "Thyristorsteuerunq", bei welchem hohe Anlaufströme auftreten, führt das uneinheitliche Verhalten der Verbindungsstellen 13 und 12 hinsichtlich der Temperatur zu stark unterschiedlichen und auch hohen elektrischen Verlusten an den Verbindungsstellen. Dadurch erwärmen sich die Leistungsteile trotz symmetrischer Strombelastung ungleich. Man kann nun das mittlere Leistungsteil durch geeignete Modifikation der Kühlkanale etwas wärmer halten als die beiden äußeren Leistungsteile und nur das mittlere Leistungsteil mittels Temperatursensor überwachen. Durch das undefinierte und ungünstige Verhalten der Verbindungsstellen sind die für diese Baugröße geplanten Nenn-Stromwerte von 470 A und 570 A jedoch nicht realisierbar, da mit zu hohen Temperaturen in den Leistungsteilen und dem Kontaktsystem gerechnet werden muss.

Damit stellt sich das Problem, alle in den Strompfaden vorkommenden Verbindungsstellen so zu verbessern, dass der Übergangswiderstand von Anfang an gering ist und sich auch über die Lebenszeit des Gerätebetriebs nur bis zu einem gewissen Grad erhöht bzw. nahezu stabil bleibt.

Das Patentdokument WO 2015/052955 A1 (MITSUBISHI ELECTRIC CORP [JP]) 16. April 2015 (2015-04-16), das als nächstliegender Stand der Technik angesehen wird, beschreibt eine Leiterverbindungsstruktur in einer Busverbindungsanwendung für elektrische Geräte oder dergleichen, wobei eine Verbindungsfläche eines Leiters und eine Verbindungsfläche eines anderen Leiters zusammengebracht und mit einem Befestigungselement unter Verwendung eines Durchgangslochs, welches auf jeder der Verbindungsflächen vorgesehen ist, verbunden werden. Die Leiterverbindungsstruktur ist so aufgebaut, dass eine kreisförmige oder polygonale Nut konzentrisch zu dem Durchgangsloch auf der Verbindungsfläche des eines Leiters durch Prägen gebildet und ein Vorsprung durch eine Materialausbauchung aus der Nut gebildet ist. Wenn die beiden Leiter verbunden sind, steht der Vorsprung in Linienkontakt mit der Verbindungsfläche des anderen Leiters.

Es ist bekannt, Verbindungsstellen häufig mit Kupfer als Verbindungspartner auszuführen. Dabei kommt sowohl blankes als auch verzinntes Kupfer und auch Kombinationen davon zum Einsatz. Bevorzugt werden Verbindungen, bei welchen beide Partner aus verzinntem Kupfer bestehen, da die Verzinnung einen Schutz vor Korrosion darstellt und aufgrund der leichten Verformbarkeit von Zinn Oberflächenrauhigkeiten bzw. Oberflächenfehler gut ausgeglichen werden können. Es entstehen so mehr Kontaktpunkte, die den Strom führen können.

Bei einer weiteren Verbindungsvariante bestehen die Verbindungspartner aus versilbertem Kupfer und Aluminium. Diese Verbindung wird bevorzugt bei einer Wechselbelastung eingesetzt, die eine nennenswerte Temperaturänderung an den Verbindungsteilen erzeugt. Dadurch werden Grenzschichten, die sich bei dieser Paarung bilden, immer wieder aufgebrochen, so dass der Übergangswiderstand in einem akzeptablen Bereich bleibt. Für eine Dauerbelastung ist diese Kombination wegen der Grenzschichtbildung weniger geeignet.

Eine weitere Maßnahme, um eine niederohmige Verbindung zwischen Aluminium und Kupfer herzustellen sind definiert strukturierte Scheiben, die zwischen die Verbindungspartner gelegt werden. Diese durchstoßen beim Verschrauben mit ihrer Struktur die elektrisch störende Oxidschicht des Aluminiums, wodurch ein niedriger Übergangswiderstand erreicht wird.

Fig. 2 zeigt eine derartige AI-Elastkontaktscheibe 21. Die Elastkontaktscheibe 21 ist vorzugsweise aus Aluminium gefertigt und dringt nicht nur in die Verbindungspartner ein, sondern verformt sich auch während des Verschraubvorgangs etwas. Damit das dabei teilweise zum Vorschein tretende blanke Aluminium nicht oxidiert, ist die Elastkontaktscheibe 21 oberflächenverzinnt, so dass das Zinn die Aluminiumbereiche bedeckt und vor Luftoxidation schützt. Voraussetzung für die korrekte Funktion ist der gleichmäßige Krafteintrag über die Scheibenfläche, so dass bei dünneren Verbindungspartnern 4 mm dicke Stahlscheiben unter Schraube und/oder Mutter gelegt werden müssen.

Eine weitere Möglichkeit für die Verbindung von Aluminium mit Kupfer sind Cupal-Scheiben. Diese bestehen aus zwei formschlüssig miteinander verbundenen Scheiben, wobei die eine Scheibe aus Aluminium und die andere aus Kupfer besteht. Durch diesen Aufbau sollen elektrochemische Prozesse an den Kontaktflächen vermieden werden. Für einen niedrigen Übergangswiderstand auf der Aluminiumseite müssen die beiden Aluminiumflächen vor dem Verschrauben von einer Oxidschicht befreit werden. In der Regel wird zuvor noch ein Kontaktfett aufgetragen, damit kein Sauerstoff oder andere Luftbestandteile an die Grenzfläche gelangen und eine erneute Oxidation bzw. Korrosion hervorrufen können.

Bei der Verbindung zweier Aluminium-Partner oder eines Aluminium-Partners mit einem Kupfer-Partner ohne Hilfsmittel entsprechend der AI-Elastkontaktscheiben oder Cupal-Scheiben ist das Entfernen der Oxidschicht vom Aluminium-Partner und das sofortige, anschließende Fetten der blanken Aluminiumfläche als Oxidations- und Korrosionsschutz eine weitere Möglichkeit, um eine elektrische Verbindung herzustellen. Das Entfernen der Oxidschicht kann z.B. mechanisch durch Bürsten oder Abschleifen mit Schmirgelpapier erfolgen.

Die Nachteile der aus dem Stand der Technik bekannten Herstellungsverfahren für eine elektrische Kontaktierungsschnittstelle mit einem geringen und stabilen elektrischen Übergangswiderstand bestehen in der kostenintensiven und technisch anspruchsvollen Herstellung.

Demgemäß besteht die Aufgabe der vorliegenden Erfindung darin, eine elektrische Kontaktierungsschnittstelle mit einem geringen und stabilen elektrischen Übergangswiderstand auf einfache und kostengünstige Art und Weise zu realisieren.

Diese Aufgabe wird erfindungsgemäß durch eine elektrische Kontaktierungsschnittstelle mit den Merkmalen des Patentanspruchs 1 gelöst. Vorteilhafte Aus- und Weiterbildungen, welche einzeln oder in Kombination miteinander eingesetzt werden können, sind der Gegenstand der abhängigen Ansprüche.

Erfindungsgemäß wird diese Aufgabe durch eine elektrische Kontaktierungsschnittstelle mit einem geringen und stabilen elektrischen Übergangswiderstand mit mindestens zwei Kontaktierungspartnern gelöst, welche sich zur elektrischen Kontaktierung beaufschlagen. Die Erfindung zeichnet sich dadurch aus, dass bei einer der beiden Kontaktierungspartner im Bereich einer Kontaktierungsfläche eine Strukturierung ausgebildet ist, welche sich aus der Ebene der Kontaktierungsfläche des einen Kontaktierungspartners heraus erhebt, wobei sich die Strukturierung unter dem Einfluss einer mechanischen Kraft deformiert und im gegenüberliegenden Kontaktierungspartner eine entsprechende Deformation in Form einer Vertiefung hervorruft, wobei die sich aus der Ebene erhebende Struktur so ausgebildet ist, dass sich auch nach der im gegenüberliegenden Kontaktierungspartner hervorgerufenen Deformierung die ebenen Bereiche der beiden Kontaktflächen nicht berühren, so dass der elektrische Strom gezwungen ist, ausschließlich über die beim Deformationsvorgang entstandene Kontaktschnittstelle zu fließen, so dass die Stromübertrittsflächen genau lokalisiert sind.

Das zu lösende technische Problem wird dadurch gelöst, dass einer der beiden Kontaktierungspartner im Bereich der Kontaktfläche eine Strukturierung erhält, welche sich aus der Kontaktflächenebene heraus erhebt. In einer besonders vorteilhaften Ausgestaltung der Erfindung wird einer der beiden Kontaktierungspartner mit einer Oberflächenverzinnung versehen. Anstelle der Verzinnung kann auch eine dünne, beidseitig verzinnte Kupferfolie zwischen die Verbindungspartner gelegt werden.

Als Material für die Kontaktierungspartner kommt vorzugsweise Aluminium zum Einsatz, da Aluminium kostengünstiger als Kupfer und auch leichter zu bearbeiten ist. Außerdem sind relativ komplexe Profile im kostengünstigen Strangpressverfahren herstellbar. Zudem hat Aluminium ein deutlich geringeres spezifisches Gewicht als Kupfer, so dass die Geräte leichter werden können. Des Weiteren kann die größere Elastizität von Aluminium verglichen mit Kupfer dazu beitragen, dass mechanische Spannungen, die z.B. durch eine thermische Ausdehnung infolge von Erwärmung oder durch Fertigungstoleranzen entstehen, besser auszugleichen sind.

Durch die erfindungsgemäße Kontaktschnittstelle werden genau definierte elektrische Kontaktverhältnisse zwischen zwei Kontaktierungspartnern oder mehreren erzeugt, die niedrige und stabile Übergangswiderstände gewährleisten. Diese niedrigen Übergangswiderstände ändern sich nur wenig unter dem Einfluss von Temperaturänderungen infolge einer Lastwechselbeanspruchung. Es können auch mechanisch relativ komplexe Baugruppen mit einer Vielzahl an elektrischen Kontaktstellen, realisiert werden.

Durch die hier vorgeschlagenen Maßnahmen können die ohmschen Verluste im Strompfad "Überbrückung" von ca. 400 W, die zu einem Großteil aus elektrischen Verlusten an den Kontaktstellen mit ebenen Kontaktflächen bestehen, auf ca. ein Drittel gesenkt werden. Erst durch diese Maßnahmen sind die Gerätenennströme 470 A und 570 A in dieser Bauform realisierbar. Durch die erhebliche Verringerung der ohmschen Verluste an den Kontaktstellen kann die pro Volumeneinheit erzeugte ohmsche Verlustleistung deutlich reduziert und damit die Gerätemaße entsprechend verkleinert werden. Die Verbindungspartner können kostengünstig im Strangpressverfahren hergestellt werden. Es kann das leichte und kostengünstige Aluminium als Kontaktmaterial eingesetzt werden, welches sich besonders kostengünstig und einfach im Strangpressverfahren herstellen lässt.

Alternativ kann eine Kontaktfläche oder können auch beide durch einen Prägevorgang mit einer geeigneten, sich aus der Kontaktebene erhebenden Struktur versehen werden. Zur Vermeidung von Umwelteinflüssen werden bei ebenen Kontaktflächen diese häufig vor dem Verschrauben mit einem Kontaktfett bestrichen, welches eine Oxidation und damit eine Verschlechterung des Übergangswiderstandes vermeiden soll. Bei der Verwendung der hier vorgestellten Strukturen zum Erzeugen genau definierter Kontaktflächen bzw. Stromübertrittflächen ist ein Fetten nicht notwendig, da der hohe Anpressdruck die Verbindungsstellen luftdicht abschließt. Dies gilt insbesondere dann, wenn einer der beiden Kontaktierungspartner mit einer Oberflächenverzinnung versehen ist, wodurch die Fertigung vereinfacht wird. Andere Hilfsmittel wie beispielsweise eine AI-Elastkontaktscheibe werden nicht benötigt, wobei diese auch nicht in der passenden Größe mit kleinem Durchmesser verfügbar sind.

Eine Strukturierung verringert nicht nur bei Kontaktierungspartnern aus Aluminium die Übergangswiderstände, sondern auch dann, wenn unproblematische Verbindungspartner wie verzinnte Kupferleiter verbunden werden sollen. Die weiche Zinnoberfläche begünstigt die Entstehung von Stromübertrittspunkten, da sie sich besser an Oberflächenunebenheiten anpassen kann. Dadurch werden auch bei ebenen Kontaktflächen niedrige Übergangswiderstände erzielt. Mit der erfindungsgemäßen Strukturierungsmaßnahme können die Übergangswiderstände auch hier zusätzlich um ca. 10 - 20 % reduziert werden.

Ausgangspunkt für die Erfindung war die Überlegung, dass bei realen, ebenen Kontaktflächen der Stromübertritt nur an wenigen, sogenannten Kontaktpunkten auftritt, die sich unter dem Einfluss der Anpresskraft mehr oder wenig zufällig ergeben und auch bei Erwärmung infolge der dann auftretenden mechanischen Längenänderungen der Verbindungspartner wandern bzw. an anderen Stellen bilden können. Meistens ist die theoretisch mögliche Kontaktfläche so groß, dass bei den mittels einer Verschraubung aufbringbaren Anpresskräften ein zu geringer Druck für definierte Kontakt- und damit Stromübertrittsverhältnisse entsteht.

Die erfindungsgemäße Strukturierung einer der beiden Kontaktflächen nutzt nur ca. ein Hundertstel der theoretisch zur Verfügung stehenden Kontaktfläche für den Stromübertritt. Da die Anpresskraft der Verschraubung nur auf die durch die Strukturierung vorgegebene Kontaktfläche wirken kann, werden dort sehr hohe Drücke erzeugt. Es entstehen genau definierte Kontaktverhältnisse mit niedrigen und stabilen Übergangswiderständen, die sich auch unter dem Einfluss von Temperaturänderungen infolge einer Lastwechselbeanspruchung nur wenig ändern.

Durch die Verzinnung desjenigen Verbindungspartners, der mit einer Strukturierung im Kontaktbereich versehen ist, können die Übergangswiderstände noch einmal etwas verringert werden.

Die Deformierung erzeugt eine Oberflächenvergrößerung und damit blanke Aluminiumbereiche sowohl im Bereich der Strukturierung als auch im Bereich der Vertiefung, die im gegenüberliegenden Kontierungspartner entsteht. Das weiche Zinn schmiegt sich an die neu entstehenden Kontaktflächen an und schützt die blanken Aluminiumbereiche vor Oxidation. Dies gewährleistet die Stabilität des Übergangswiderstandes der Verbindung.

Ein weiterer wichtiger Punkt ist der Erhalt der Anpresskraft und damit des Anpressdrucks auf die Struktur-Kontaktflächen während des Gerätebetriebs. Wird die Verbindung mittels Schrauben ausgeführt, muss von der Gesamtschraubenlänge ein entsprechend langer, mechanisch unverspannter Teil vorhanden sein, damit dieser eine gewisse Federwirkung entfalten kann, um thermomechanische Längenänderungen oder auch nachträgliche Setzungsvorgänge der Kontaktstruktur ausgleichen zu können.

Ergänzend oder auch alternativ, wenn beide Verbindungspartner dünn sind, können Federelemente wie Federringe zum Einsatz kommen oder auch Zylinderhülsen verwendet werden, um längere Schrauben einsetzen zu können. Bei dünnen Verbindungspartnern müssen ergänzend Druckscheiben an den Außenseiten der Verbindungspartner vorgesehen werden, um eine gleichmäßige Kraftbeaufschlagung der Struktur-Kontaktflächen zu erreichen.

Die hier vorgestellte erfindungsgemäße elektrische Kontaktierungsschnittstelle mit einem geringen und stabilen elektrischen Übergangswiderstand liefert kompakte und kostengünstige Geräte.

In einer besonders vorteilhaften Ausgestaltung der Erfindung kann es vorgesehen sein, dass einer der beiden Kontaktierungspartner eine Oberflächenverzinnung aufweist.

Eine erfindungsgemäße Weiterführung des Konzepts kann darin bestehen, dass der Kontaktierungspartner aus einem Strangpressprofil aus Aluminium hergestellt ist.

Eine besonders vorteilhafte Weiterführung dieses Konzepts kann darin bestehen, dass der Kontaktierungspartner galvanisch verzinnt ist.

Eine weitere erfindungsgemäße Ausbildung dieses Konzepts kann vorsehen, dass zwischen den beiden Kontaktierungspartnern eine beidseitig verzinnte Kupferfolie ausgebildet ist.

Gemäß der Erfindung ist die Strukturierung in Form von mit einem Körner eingebrachten kraterförmigen Vorsprüngen um eine Durchgangsbohrung für eine Verschraubung ausgebildet.

Die erfindungsgemäße elektrische Kontaktierungsschnittstelle mit einem geringen und stabilen elektrischen Übergangswiderstand weist vorzugsweise zwei Kontaktierungspartner auf, wobei der eine im Bereich der Kontaktierungsfläche eine Strukturierung und der zweite Kontaktierungspartner vor der Kontaktierung bzw. Schnittstellenausbildung eine ebene Fläche aufweist. Die Strukturierung kann beispielsweise ausgebildet sein als sich aus der Fläche erhebender kreisförmiger Rand, der durch das Einschlagen einer Vertiefung, z.B. mit einem Körner und einem Hammer, entsteht. Diese Vertiefungen mit kreisförmigem Rand werden vorzugsweise um eine Durchgangsbohrung für einen elektrischen Anschluss angeordnet.

Weitere Vorteile und Ausführungen der Erfindung werden nachfolgend anhand eines Ausführungsbeispiels sowie anhand der Zeichnung näher erläutert.

Dabei zeigen:
- Fig. 1: in einer perspektivischen Darstellung ein aus dem Stand der Technik bekanntes Leistungsteil mit einem mechanischen Kontaktanschlusssystem wie es beispielsweise in Sanftstartgeräten zum Betreiben von Asynchronmaschinen Anwendung findet;
- Fig. 2: in einer perspektivischen Darstellung eine aus dem Stand der Technik bekannte AI-Elastkontaktscheibe;
- Fig. 3: in einer Draufsicht ein erstes Ausführungsbeispiel eines nicht erfindungsgemäßen ersten Kontaktierungspartners mit einer Strukturierung im Bereich der Kontaktierungsfläche vor der Kontaktierung mit einem zweiten Kontaktierungspartner;
- Fig. 4: in einer Draufsicht ein nicht erfindungsgemäßer zweiter Kontaktierungspartner mit einer ebenen Kontaktfläche vor der Kontaktierung mit dem ersten Kontaktierungspartner;
- Fig. 5: in einer Draufsicht der nicht erfindungsgemäße erste Kontaktierungspartner mit einer Strukturierung im Bereich der Kontaktierungsfläche nach der Kontaktierung mit einem zweiten Kontaktierungspartner;
- Fig. 6: in einer Draufsicht der nicht erfindungsgemäße zweite Kontaktierungspartner nach der Kontaktierung mit dem ersten Kontaktierungspartner;
- Fig. 7: in einer Draufsicht ein zweites Ausführungsbeispiel eines erfindungsgemäßen ersten Kontaktierungspartners mit einer zweiten Strukturierung im Bereich der Kontaktierungsfläche vor der Kontaktierung;
- Fig. 8: in einer Draufsicht der erfindungsgemäße erste Kontaktierungspartner nach Fig. 7 mit einer zweiten Strukturierung im Bereich der Kontaktierungsfläche nach der Kontaktierung mit einem zweiten Kontaktierungspartner;
- Fig. 9: in einer Draufsicht der erfindungsgemäße zweite Kontaktierungspartner nach der Kontaktierung mit dem ersten Kontaktierungspartner nach Fig. 8.

In Fig. 1 ist ein Leistungsteil 1 mit einem mechanischen Kontaktanschlusssystem, wie es beispielsweise in Asynchronmaschinen Anwendung findet, dargestellt. Diese Asynchronmaschinen sind für den Betrieb in dreiphasigen Drehstromnetzen konzipiert und enthalten drei dieser in Fig. 1 gezeigten Baugruppen. Der Anschluss der Geräte an das Drehstromnetz erfolgt über die jeweiligen Anschlussschienen 5 und 6.

Im Leistungsteil 1 sind zwei Thyristoren antiparallel angeordnet. Mit den Thyristoren wird durch geeignete Ansteuerung die Stromsteuerung durchgeführt, um die ASM sanft anlaufen zu lassen oder auch zu bremsen. Die hierbei in den Thyristoren entstehenden elektrischen Verluste werden durch Aluminium-Kühlkörper 7, 8, 9 von diesen weggeführt, um deren Überhitzung zu vermeiden. Die beiden Thyristoren befinden sich zwischen dem oberen Kühlkörper 7 und den beiden unteren Kühlkörpern 8, 9 und sind hier nicht zu sehen.

Fig. 2 zeigt eine aus dem Stand der Technik bekannte AI-Elastkontaktscheibe 21. Die AI-Elastkontaktscheibe 21 ist vorzugsweise aus Aluminium gefertigt und dringt nicht nur in die Verbindungspartner ein, sondern verformt sich auch während des Verschraubvorgangs etwas. Damit das dabei teilweise zum Vorschein tretende blanke Aluminium nicht oxidiert, ist die Elastkontaktscheibe 21 oberflächenverzinnt, so dass das Zinn die Aluminiumbereiche bedeckt und vor Luftoxidation schützt.

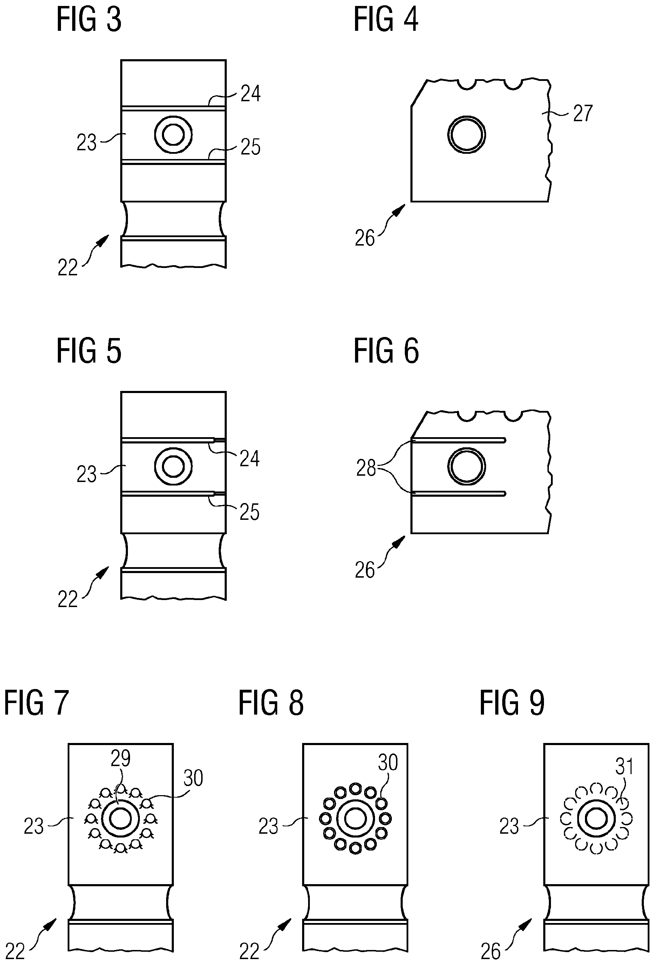

Fig. 3 zeigt ein erstes Ausführungsbeispiel eines nicht erfindungsgemäßen ersten Kontaktierungspartners 22 mit einer Strukturierung im Bereich einer Kontaktierungsfläche 23 vor der Kontaktierung mit einem zweiten Kontaktierungspartner. Der Kontaktierungspartner 22 ist vorzugsweise ein Aluminiumverbinder. Die Strukturierung ist vorzugsweise aus zwei Stegen 24, 25 mit einem trapezähnlichen Profil ausgebildet. Die Höhe beträgt ca. 0,2 mm, die Breite variiert von ca. 0,5 mm bis ca. 1 mm am Trapezfuß. Die Steglänge beträgt ca. 15 mm. Da der Aluminiumverbinder aus einem Strangpressprofil hergestellt wird, lassen sich die Stege 24, 25 sehr einfach und kostenneutral herstellen. Der Verbinder ist vorzugsweise galvanisch verzinnt.

Fig. 4 zeigt einen nicht erfindungsgemäßen zweiten Kontaktierungspartner 26 mit einer ebenen Fläche 27, welche die Kontaktierungsfläche 23 nach der Kontaktierung mit dem ersten Kontaktierungspartner 22 bildet, vor der Kontaktierung mit dem ersten Kontaktierungspartner 22. Fig. 4 zeigt, wenn man die Fig. 1 hinzuzieht, die gegenüberliegende, ebene Kontaktfläche 27 am Aluminium-Kühlkörper 7 (Fig. 1). Das Verschrauben erfolgt vorzugsweise mit einer Schraube M6 in den Kühlkörper 7. Das Anzugsmoment beträgt dabei ca. 10 Nm. Es entsteht eine in der Längsachse der Schraube wirkende Kraft von ca. 3 - 5 kN, welche die Stege 24, 25 des Verbinders auf den Kühlkörper 7 presst. Dabei werden die Stege 24, 25 verformt.

In Fig. 5 ist der erste Kontaktierungspartner 22 mit einer Strukturierung im Bereich der Kontaktierungsfläche 23 nach der Kontaktierung mit einem zweiten Kontaktierungspartner 26 dargestellt. Durch das Verschrauben werden die Stege 24, 25 verformt. Durch die Verformung der Stege 24, 25 wird die Oberfläche und damit die Stromübertrittsfläche vergrössert. Die Verzinnung verhindert, dass hierbei blankes Aluminium an der Oberfläche vorhanden ist. Durch die Anpresskraft erzeugen die Stege 24, 25 entsprechende Vertiefungen 28 im Kühlkörper 7, die mit einer Oberflächenvergrößerung im Vertiefungsbereich einhergeht (Fig. 6). Dadurch wird die Oxidschicht unterbrochen und die verzinnten Stege 24, 25 kommen teilweise mit blankem Aluminium in Kontakt.

Durch die Weichheit der Zinnschicht werden die Vertiefungsoberflächen mit der Zinnschicht bedeckt und damit auch die blanken Aluminiumstellen, so dass diese nicht mehr oxidieren können. Für diesen Zweck genügt bereits eine Zinnschichtdicke von 5 - 10 um. Die Höhe der Stege 24, 25 des Verbinders ist so gewählt, dass auch nach ihrer Verformung und nach der Entstehung der Vertiefungen 28 im Kühlkörper 7 sich die ebenen Flächen der beiden Kontaktierungsflächen 23 nicht berühren und der Strom gezwungen ist, über die bei der Verformung entstandenen Kontaktierungsflächen 28 zu fließen. Die Kontaktfläche beider deformierter Stege 24, 25 beträgt in etwa 2 × 15 mm × 0,9 mm = 27 mm². Mit der M6-Schraube wird eine in Längsrichtung der Schraube wirkende Kraft von ca. 3000 ... 5000 N erzeugt, die sich auf die Kontaktfläche überträgt. Der Druck auf diese Stromübertrittflächen beträgt damit etwa p = 3000 N / 27 mm2 .... 5000 N / 27 mm2 = 111 N/mm2 ... 185 N/mm2.

Die theoretische Kontaktfläche, also die Fläche, an der sich die beiden Verbindungspartner theoretisch berühren können, wenn keine Struktur vorhanden ist, beträgt ca. 20 mm × 15 mm = 3000 mm2 und ist damit ca. 100 - mal größer als die tatsächlich für die Stromleitung genutzte Kontaktfläche über die Stegoberfläche. Der Stromübertritt erfolgt somit über eine wesentlich geringere Fläche als im Fall ebener Kontaktflächen und idealer Kontaktverhältnisse.

Trotz der nur geringen an der Stromleitung beteiligten Kontaktfläche, die durch die Strukturierung definiert wird, sind die Übergangswiderstände der Verbindungsstelle sehr niedrig. Sie bewegen sich in einem Bereich von ca. 5 - 10 uOhm und sind damit um den Faktor 2 - 20 kleiner als die Übergangswiderstände ohne die Strukturierung. Insbesondere weisen die Übergangswiderstände bei einer geeigneten Strukturierung nur eine geringe Streuung auf.

Der positive Einfluss der Strukturierung zeigt sich auch darin, dass die Übergangswiderstände bei Wechsel- und Dauerbelastung nur noch gering ansteigen auf ca. 10 -20 uOhm und dann stabil bleiben. Der stabile Zustand wird nach ca. 3000-5000 Temperaturzyklen mit einem Temperaturhub von ca. 80 K an der Verbindungsstelle erreicht, ausgehend von einer Starttemperatur von T start = 40 °C. Mittels der hier beispielhaft gezeigten Strukturierung einer der beiden Kontaktflächen werden hingegen genau definierte Kontaktverhältnisse erzeugt, mit denen niedrige und stabile Übergangswiderstände realisierbar sind. Die ohmschen Verluste im Strompfad "Überbrückung" konnten damit von ca. 400 W auf ca. 130 ... 150 W gesenkt werden. Die Gerätenennströme 470 A und 570 A sind damit in dieser Bauform umsetzbar.

Fig. 6 zeigt den zweiten Kontaktierungspartner 26 nach der Kontaktierung mit dem ersten Kontaktierungspartner 22, wobei nun durch die Verschraubung Vertiefungen 28 im Aluminium-Kühlkörper 7 ausgebildet sind.

In Fig. 7 ist ein zweites Ausführungsbeispiel eines erfindungsgemäßen ersten Kontaktierungspartners 22 mit einer zweiten Strukturierung im Bereich der Kontaktierungsstelle 23 vor der Kontaktierung dargestellt. Um eine Durchgangsbohrung 29 für eine Verschraubung sind vorzugsweise mit einem Körner insbesondere kraterförmige Vorsprünge 30 eingebracht.

Fig. 8 zeigt den ersten Kontaktierungspartner 22 nach Fig. 7 mit einer zweiten Strukturierung im Bereich der Kontaktierungsfläche 23 nach der Kontaktierung mit einem zweiten Kontaktierungspartner. Durch das Verschrauben werden die Kraterränder plattgedrückt.

In Fig. 9 ist der erfindungsgemäße zweite Kontaktierungspartner 26 nach der Kontaktierung mit dem ersten Kontaktierungspartner 22 nach Fig. 8 dargestellt. In diesem gegenüberliegend zum ersten Kontaktierungspartner 22 positionierten zweiten Kontaktierungspartner 26 erzeugen die Kraterränder entsprechende Vertiefungen 31, vergleichbar zum ersten Ausführungsbeispiel.

Anstelle der Verzinnung eines der beiden Kontaktierungspartner 22, 26 kann zwischen die Kontaktierungsfläche 23 eine Kupferfolie, welche beidseitig verzinnt ist, gelegt werden. Diese bewirkt ebenfalls eine Bedeckung und damit einen Schutz der Oberfläche der deformierten Kontaktstruktur und der Oberfläche der im gegenüberliegenden Verbindungspartner entstandenen Vertiefung 31.

Bestehen die Kontaktierungspartner aus Aluminium und Kupfer, kann die Struktur auch im Kupfer angebracht werden. Aufgrund der größeren mechanischen Festigkeit von Kupfer ist das Setzungsverhalten der Schraubverbindung etwas geringer.

Außerdem können mehr als zwei Kontaktierungspartner miteinander verschraubt werden, d.h., es sind Stapelaufbauten möglich. Die Kontaktflächen der einzelnen Verbindungspartner müssen so mit Strukturen versehen werden, dass bei zwei sich gegenüberliegenden Kontaktflächen immer mindestens eine Struktur wirksam ist.

Die erfindungsgemäße elektrische Kontaktierungsschnittstelle mit einem geringen und stabilen elektrischen Übergangswiderstand zeichnet sich durch ihren einfachen und kostengünstigen Herstellungsprozess aus.

### Bezugszeichenliste

- 1: Leistungsteil
- 2: Festschaltstück
- 3: Festschaltstück
- 4: Brücke
- 5: Anschlussschiene
- 6: Anschlussschiene
- 7: Kühlkörper
- 8: Kühlkörper
- 9: Kühlkörper
- 10: Verbindungsstelle
- 11: Aluminiumverbinder
- 12: Verbindungsstelle
- 13: Verbindungsstelle
- 14: Aluminiumverbinder
- 15: Verbindungsstelle
- 16: Verbindungsstelle
- 17: Verbindungsstelle
- 18: Aluminiumverbinder
- 19: Verbindungsstelle
- 20: Verbindungsstelle
- 21: AI-Elastkontaktscheibe
- 22: Kontaktierungspartner
- 23: Kontaktierungsfläche
- 24: Stege
- 25: Stege
- 26: Kontaktierungspartner
- 27: Fläche
- 28: Vertiefung
- 29: Durchgangsbohrung
- 30: Kraterförmige Vorsprünge
- 31: Vertiefung

## Patentansprüche

1. Elektrische Kontaktierungsschnittstelle mit einem geringen und stabilen elektrischen Übergangswiderstand mit mindestens zwei Kontaktierungspartnern (22, 26), welche sich zur elektrischen Kontaktierung beaufschlagen, wobei bei einer der beiden Kontaktierungspartner (22) im Bereich einer Kontaktierungsfläche (23) eine Strukturierung ausgebildet ist, welche sich aus der Ebene der Kontaktierungsfläche (23) des einen Kontaktierungspartners (22) heraus erhebt, wobei sich die Strukturierung unter dem Einfluss einer mechanischen Kraft deformiert und im gegenüberliegenden Kontaktierungspartner (26) eine entsprechende Deformation in Form einer Vertiefung (28, 31) hervorruft, wobei die sich aus der Ebene erhebende Struktur so ausgebildet ist, dass auch nach der im gegenüberliegenden Kontaktierungspartner hervorgerufenen Deformierung sich die ebenen Bereiche der beiden Kontaktierungsflächen (23) nicht berühren, so dass der elektrische Strom gezwungen ist, ausschließlich über die beim Deformationsvorgang entstandene Kontaktierungsfläche zu fließen, so dass die Stromübertrittsflächen genau lokalisiert sind,
**dadurch gekennzeichnet,**
**dass** die Strukturierung in Form von mit einem Körner eingebrachten kraterförmigen Vorsprüngen um eine Durchgangsbohrung (29) für eine Verschraubung ausgebildet ist.

2. Elektrische Kontaktierungsschnittstelle nach Anspruch 1, **dadurch gekennzeichnet, dass** einer der beiden Kontaktierungspartner (22, 26) eine Oberflächenverzinnung aufweist.

3. Elektrische Kontaktierungsschnittstelle nach Anspruch 1 oder 2, **dadurch gekennzeichnet, dass** einer der beiden Kontaktierungspartner (22, 26) aus einem Strangpressprofil aus Aluminium hergestellt ist.

4. Elektrische Kontaktierungsschnittstelle nach einem der Ansprüche 1 bis 3, **dadurch gekennzeichnet, dass** einer der beiden Kontaktierungspartner (22, 26) galvanisch verzinnt ist.

5. Elektrische Kontaktierungsschnittstelle nach Anspruch 1, **dadurch gekennzeichnet, dass** zwischen den beiden Kontaktierungspartnern (22, 26) eine beidseitig verzinnte Kupferfolie ausgebildet ist.

## Claims

1. Electrical contacting interface with a low and stable electrical transfer resistance comprising at least two contacting components (22, 26), which interact for electrical contacting, wherein, in the case of one of the two contacting components (22), in the region of a contacting surface (23) there is formed a structuring that protrudes out of the plane of the contacting surface (23) of the one contacting component (22), the structuring being deformed under the influence of a mechanical force and causing a corresponding deformation in the form of a depression (28, 31) in the opposite contacting component (26), the structure that is protruding out of the plane being formed such that, even after the deformation caused in the opposite contacting component, the flat regions of the two contacting surfaces (23) do not touch, and so the electrical current is forced to flow exclusively via the contacting surface created during the deformation process, such that the current transfer surfaces are exactly localized,
**characterized**
**in that** the structuring takes the form of crater-shaped projections, introduced with a centre punch, around a through-hole (29) for a screwing operation.

2. Electrical contacting interface according to Claim 1, **characterized in that** one of the two contacting components (22, 26) has a surface tinning.

3. Electrical contacting interface according to Claim 1 or 2, **characterized in that** one of the two contacting components (22, 26) is produced from an extruded profile of aluminium.

4. Electrical contacting interface according to one of Claims 1 to 3, **characterized in that** one of the two contacting components (22, 26) is electroplated with tin.

5. Electrical contacting interface according to Claim 1, **characterized in that** a copper film tinned on both sides is formed between the two contacting components (22, 26).

## Revendications

1. Interface de mise en contact électrique comprenant une résistance électrique de contact petite et stable ayant au moins deux partenaires (22, 26) de mise en contact, qui se sollicitent pour la mise en contact électrique, dans laquelle, pour l'un des deux partenaires (22) de mise en contact, il est constitué, dans la partie d'une surface (23) de mise en contact, une structuration, qui s'élève du plan de la surface (23) de mise en contact du un partenaire (22) de mise en contact, dans laquelle la structuration se déforme sous l'influence d'une force mécanique et provoque, dans le partenaire (26) opposé de mise en contact, une déformation correspondante sous la forme d'un creux (28, 31), dans laquelle la structure s'élevant du plan est ainsi constituée que, même après la déformation provoquée dans le partenaire opposé de mise en contact, les parties planes des deux surfaces (23) de mise en contact ne se touchent pas, de sorte que le courant électrique est forcé de passer exclusivement par la surface de mise en contact créée lors de la déformation, de manière à localiser exactement les surfaces de franchissement du courant,
**caractérisée**
**en ce que** la structuration est constituée sous la forme de saillies en forme de cratères poinçonnées par un poinçon, afin de constituer un trou (29) de passage pour un vissage.

2. Interface de mise en contact électrique suivant la revendication 1, **caractérisée en ce que** l'un des deux partenaires (22, 26) de mise en contact a un étamage de surface.

3. Interface de mise en contact électrique suivant la revendication 1 ou 2, **caractérisée en ce que** l'un des deux partenaires (22, 26) de contact est fabriqué en un profilé filé à la presse en aluminium.

4. Interface de mise en contact électrique suivant l'une des revendications 1 à 3, **caractérisée en ce que** l'un des deux partenaires (22, 26) de contact est étamé galvaniquement.

5. Interface de mise en contact électrique suivant la revendication 1, **caractérisée en ce qu'**une feuille de cuivre étamée des deux côtés est interposée entre les deux partenaires (22, 26) de mise en contact.
